# FASCICULE DE BREVET EUROPEEN

(11) **EP 2 037 284 B1**
(45) Date de publication et mention de la délivrance du brevet: **28.07.2010**
(21) Numéro de dépôt: 08356119.1
(22) Date de dépôt: 13.08.2008
(51) Int. Cl.: G01P 5/02, G01P 21/02, G01P 13/02, G01F 25/00

(54) **Procédé et dispositif pour vérifier le bon fonctionnement d'un anémomètre**
Verfahren und Vorrichtung zur Überprüfung des richtigen Funktionierens eines Fahrtmessers
Method and device to check the correct operation of an anemometer

(30) Priorité: 11.09.2007 FR 0706364
(43) Date de publication de la demande: 18.03.2009
(73) Titulaire: MANITOWOC CRANE GROUP FRANCE, 69130 Ecully (FR)
(72) Inventeur: Laguigne, Didier, 91270 Vigneux sur Seine (FR); Roni-Damon, Bruno, 69002 Lyon (FR)
(74) Mandataire: Bratel, Gérard

(56) Documents cités:
- WO-A-01/35109
- JP-A- 10 227 810
- US-A- 4 365 504

## Description

La présente invention concerne, de façon générale, le domaine technique des anémomètres. Plus particulièrement, cette invention s'intéresse à un procédé et à un dispositif pour vérifier le bon fonctionnement d'un anémomètre, notamment un anémomètre prévu pour être installé sur une grue de chantier.

Les grues de chantier, telles que les grues à tour, sont habituellement équipées d'un anémomètre, lequel sert à mesurer la vitesse du vent environnant, en particulier en vue de la mise à l'arrêt de la grue lorsque la vitesse du vent dépasse une valeur limite prescrite, par exemple égale à 72 km/h. Il s'agit habituellement d'un anémomètre classique, avec une partie tournante comportant une turbine à coupelles, entraînée en rotation par le vent, la vitesse de rotation de la partie tournante étant détectée en tant que grandeur représentative de la vitesse du vent. Plus particulièrement, les signaux issus de l'anémomètre sont traités dans une chaîne de mesure, qui permet l'affichage de la vitesse du vent et/ou une signalisation particulière lorsque la vitesse ainsi mesurée du vent atteint un seuil critique.

Comme tous les instruments de mesure, notamment ceux participant à la sécurité, les anémomètres nécessitent d'être contrôlés périodiquement, la périodicité des contrôles pouvant être imposée par des textes législatifs ou des réglementations selon les pays.

Plus particulièrement, la législation française impose un examen approfondi d'une grue au moins tous les cinq ans. L'anémomètre installé sur une grue de chantier doit donc, lui aussi, être contrôlé au moins tous les cinq ans. Néanmoins, un constructeur de grues peut préconiser des visites de contrôle plus fréquentes, par exemple tous les quatre ans. Le contrôle d'un tel anémomètre est d'autant plus nécessaire qu'il s'agit d'un instrument utilisé en milieu extérieur, dans des conditions climatiques plus ou moins rudes, cet instrument pouvant subir des chocs et des déformations au cours des opérations répétées de démontage et de remontage, et aussi lors du transport de la grue.

L'opération de contrôle d'un anémomètre de grue de chantier implique, dans la pratique habituelle, un démontage de l'anémomètre et une vérification de celui-ci en soufflerie, ce qui nécessite une immobilisation du matériel durant plusieurs jours.

Il existe déjà des propositions pour remédier à ces inconvénients, telles que celle décrite dans le brevet japonais JP 10227810 A. Selon ce document, un moteur électrique entraîne en rotation la turbine de l'anémomètre par l'intermédiaire d'un organe en matériau élastique et de quatre encoches, à une vitesse de rotation proportionnelle à la vitesse du vent, et ainsi l'on vérifie que les indications fournies par l'anémomètre sont identiques à la vitesse de consigne. Cependant, le moteur entraînant en rotation la partie tournante de l'anémomètre pendant tout le temps de la vérification, ce mode opératoire ne permet pas de détecter des défauts mécaniques de l'anémomètre tels qu'un roulement (palier) défectueux, un axe de turbine tordu ou une coupelle dont l'aérodynamique est défectueuse.

Le brevet US 4365504 décrit un dispositif de test d'anémomètres, conçu pour comparer le fonctionnement d'un anémomètre de référence avec celui d'un autre anémomètre, en faisant tourner ces deux anémomètres à l'aide d'un ventilateur industriel dont la vitesse peut être ajustée, et en comparant les indications obtenues pour différentes valeurs. Comme on le comprend aisément, il s'agit là d'une méthode de laboratoire coûteuse et contraignante, qui nécessite de disposer d'un anémomètre de référence et d'un ventilateur industriel, ce genre de matériel n'étant en principe pas disponible sur un chantier.

La demande internationale de brevet WO 01/35109 décrit le contrôle d'un anémomètre équipé d'un moteur électrique, dont la conception et le fonctionnement sont différents de ceux des anémomètres qui équipent habituellement les grues de chantier ; ainsi, un tel mode de contrôle ne permet pas de tester un anémomètre de grue de chantier.

La présente invention vise à remédier aux inconvénients et inadaptations des procédés et dispositifs de contrôle d'anémomètres précédemment évoqués, et elle a donc pour but de fournir une solution particulièrement adaptée au test d'anémomètres équipant les grues de chantier, cette solution permettant une vérification complète du fonctionnement d'un anémomètre, ceci sur le chantier et en un temps bref, en testant le fonctionnement des afficheurs et des alarmes, et en testant aussi le bon état mécanique global de la partie tournante de l'anémomètre : roulements, axe, turbine équipée de ses coupelles.

A cet effet, l'invention a essentiellement pour objet un procédé pour vérifier le bon fonctionnement d'un anémomètre avec une partie tournante comportant une turbine à coupelles, notamment d'un anémomètre prévu pour être installé sur une grue de chantier, ce procédé consistant, grâce à des moyens motorisés d'entraînement en rotation de la partie tournante de l'anémomètre, à lancer en rotation cette partie tournante à une vitesse initiale définie, puis à laisser librement tourner la partie tournante en mesurant sa vitesse de rotation résiduelle à au moins un instant, la vitesse ainsi mesurée étant comparée à une valeur de référence pour le même instant.

Ainsi, le principe de l'invention consiste, à l'aide d'un moteur, à lancer d'abord la partie tournante de l'anémomètre à l'aide d'un moteur, mais (contrairement aux propositions antérieures) à désaccoupler ensuite le moteur et à laisser librement tourner la turbine de l'anémomètre, en analysant son ralentissement par comparaison avec des valeurs de référence, ces dernières ayant été préalablement obtenues notamment en faisant des moyennes de plusieurs mesures sur des anémomètre neufs du même type que l'anémomètre testé. Le ralentissement de la partie tournante de l'anémomètre contrôlé est fonction non seulement du freinage par frottement aérodynamique de la turbine à coupelles tournant dans l'air ambiant, mais aussi de l'état mécanique de la partie tournante et notamment des frottements mécaniques auxquels est soumise la partie tournante, au niveau des roulements.

Dans un mode de mise en oeuvre préféré du procédé de l'invention, la partie tournante de l'anémomètre est d'abord lancée en rotation dans un premier sens, une première mesure de vitesse de rotation résiduelle étant faite pendant que cette partie tournante tourne librement dans le premier sens, avec comparaison à une première valeur de référence, puis la partie tournante est lancée en rotation dans le sens opposé, une seconde mesure de vitesse de rotation résiduelle étant faite pendant que cette partie tournante tourne librement dans l'autre sens, avec comparaison à une seconde valeur de référence.

Ainsi, l'opération initiale est répétée en entraînant la turbine de l'anémomètre dans le sens inverse, le frottement aérodynamique étant alors différent sur les coupelles de la turbine, ce qui permet un contrôle complet, tenant compte de toutes les influences auxquelles est habituellement soumise la partie tournante de l'anémomètre.

Dans tous les cas, un mode de contrôle simple mais ici suffisamment significatif consiste à mesurer la vitesse de rotation résiduelle de la partie tournante de l'anémomètre à un instant unique situé à un intervalle de temps prédéfini après l'instant où ladite partie tournante a été désaccouplée des moyens motorisés d'entraînement en rotation. La vitesse de rotation résiduelle ainsi mesurée est alors comparée à la valeur de référence correspondante, plus particulièrement à un intervalle de tolérance dont les valeurs limites supérieure et inférieure se situent de part et d'autre de la valeur de référence.

La disponibilité des moyens motorisés d'entraînement en rotation, à vitesse contrôlable, permet aussi d'effectuer commodément divers tests annexes de l'anémomètre et de ses moyens indicateurs habituels, y compris de la chaîne de mesure reliant la partie mécanique de l'anémomètre à ces moyens indicateurs. En particulier, il est ainsi possible de vérifier le bon fonctionnement des alarmes qui se déclenchent pour certains seuils prédéfinis de vitesse du vent, en entraînant la partie tournante de l'anémomètre à des vitesses de rotation correspondantes, et il devient aussi possible de vérifier l'équilibrage de la partie tournante de l'anémomètre en lui imposant, par une commande correspondante des moyens d'entraînement en rotation, une vitesse de rotation élevée, pour laquelle un mauvais équilibrage ou même un léger voilement de la turbine produirait une forte vibration.

L'invention a aussi pour objet un dispositif pour vérifier le bon fonctionnement d'un anémomètre avec une partie tournante comportant une turbine à coupelles, ce dispositif étant conçu pour la mise en oeuvre du procédé défini ci-dessus, et comprenant à cet effet, en combinaison :
- des moyens de support de l'anémomètre à tester,
- un moteur électrique d'entraînement en rotation de la partie tournante de cet anémomètre,
- des moyens d'accouplement en rotation non permanent entre le moteur électrique et ladite partie tournante,
- des moyens de contrôle de la vitesse de rotation de la partie tournante de l'anémomètre, et
- des moyens de traitement de l'information correspondant à la vitesse mesurée, en particulier par comparaison avec une ou plusieurs valeurs de référence.

Dans une forme de réalisation du dispositif de l'invention, les moyens d'accouplement en rotation non permanent entre le moteur électrique et la partie tournante de l'anémomètre à tester sont des moyens d'accouplement à friction, placés à une extrémité de l'arbre du moteur et coopérant avec le moyeu central de la turbine de l'anénomètre.

Les moyens de contrôle de la vitesse de rotation du moteur électrique d'entraînement en rotation de la partie tournante de l'anémomètre sont constitués, de préférence, par un codeur associé à ce moteur.

Les moyens de mesure de la vitesse de rotation de la partie tournante de l'anémomètre, peuvent comprendre un capteur photoélectrique qui compte le nombre de passages des coupelles devant le capteur, ce nombre de passages pouvant facilement être converti en une valeur de vitesse.

On notera que le capteur photoélectrique permet non seulement de mesurer ia vitesse de rotation résiduelle de la turbine tournant librement après son lancement, mais aussi de vérifier, au cours de la phase initiale de lancement, qu'il n'y a pas de glissement entre le moteur et la turbine, et que celle-ci se trouve donc bien lancée à la vitesse de rotation prévue pour le test à réaliser (cette vitesse correspondant, par exemple, à la vitesse de rotation constatée en présence d'un vent de 80 km/h).

L'invention sera mieux comprise à l'aide de la description qui suit, en référence au dessin schématique annexé représentant, à titre d'exemple, une forme d'exécution de ce dispositif pour vérifier le bon fonctionnement d'un anémomètre, et illustrant le procédé mis en oeuvre par ce dispositif.

Figure 1 représente un anémomètre de grue de chantier et l'appareillage habituellement associé à un tel anémomètre; Figure 2 est une vue de face d'un dispositif conforme à la présente invention, en cours d'utilisation pour le test d'un anémomètre tel que celui de la figure 1 ;

Figure 3 est un diagramme comportant des courbes représentatives de la variation, dans le temps, de la vitesse de rotation de la partie tournante d'un anémomètre, au cours d'un test réalisé conformément au procédé de l'invention.

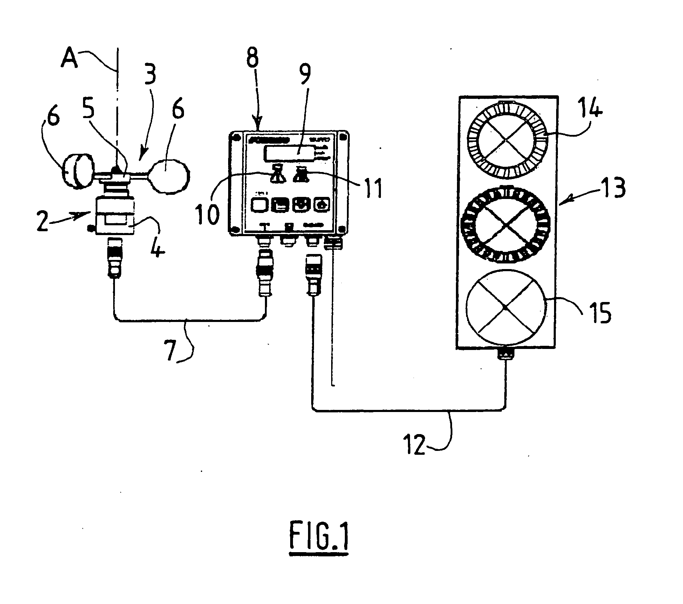

En se référant à la figure 1, il sera d'abord rappelé la structure classique d'un anémomètre, désigné dans son ensemble par la référence 2, et de l'appareillage associé à l'anémomètre.

L'anémomètre 2 possède une partie tournante 3, c'est-à-dire une partie montée rotative autour d'un axe vertical A, relativement à un corps cylindrique fixe 4. La partie tournante 3 consiste essentiellement en une turbine, avec un moyeu central 5 auquel sont rattachées des coupelles 6 périphériques. A l'intérieur du corps 4 sont placés des moyens optiques ou magnétiques (non représentés) qui détectent la rotation de la partie tournante 3 et qui émettent des signaux électriques représentatifs de cette rotation.

En service normal, l'anémomètre 2 est monté sur une grue, en un point élevé de la grue, et il se trouve relié par un câble 7 à un boîtier 8, placé dans la cabine de conduite de la grue, le boîtier 8 contenant une chaîne de mesure qui traite les signaux amenés par le câble 7. Le boîtier 8 comporte, sur sa façade, un indicateur 9 sur lequel s'affiche la vitesse du vent mesurée par l'anémomètre 2 et par la chaîne de mesure, ainsi que deux voyants lumineux 10 et 11, par exemple un voyant jaune 10 et un voyant rouge 11 qui s'éclairent en cas de dépassement de seuils de vitesse prédéfinis.

Dans l'exemple illustré par la figure 1, le boîtier 8 est lui-même raccordé, par un autre câble 12, à un module de signalisation 13 extérieur, placé sur le chantier, qui comporte lui aussi un voyant jaune 14 et un voyant rouge 15 répétant les alarmes données au grutier par les voyants 10 et 11.

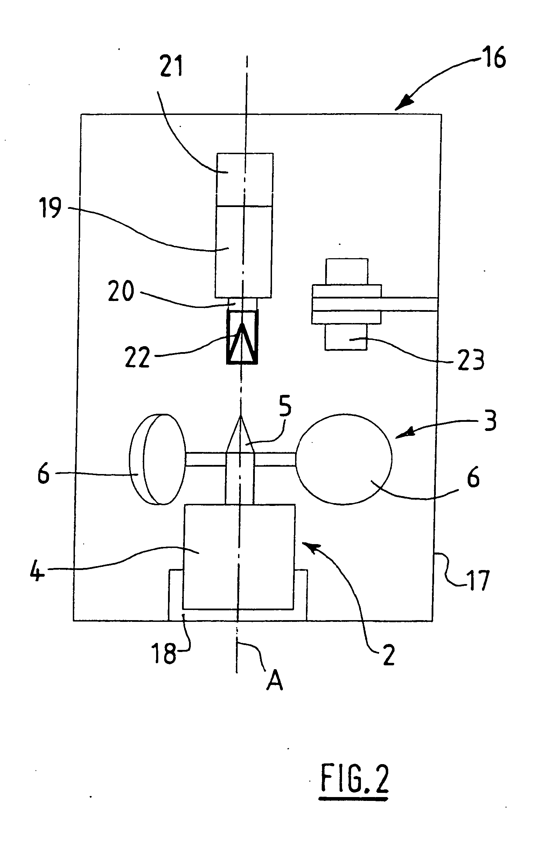

Pour procéder au contrôle périodique d'un tel anémomètre 2, celui-ci est démonté de sa position de travail sur la grue, et il est amené dans un dispositif 16 servant à tester cet anémomètre, le dispositif 16 étant représenté sur la figure 2. Pour la commodité de l'opération, l'ensemble des tests peut être effectué dans la cabine de conduite de la grue, où prend place habituellement le grutier.

Le dispositif 16 comporte un boîtier 17, représenté ouvert sur la figure 2, qui est pourvu intérieurement, dans sa partie inférieure, d'un support 18 recevant le corps 4 de l'anémomètre 2 à tester, dans une position où l'axe A de la partie tournante 3 est orienté verticalement.

Au-dessus de l'emplacement de l'anémomètre 2, le boîtier 17 renferme un moteur électrique 19, dont l'arbre 20 est orienté verticalement suivant l'axe A de la partie tournante 3 de l'anémomètre 2. Le moteur 19 est un moteur électrique à deux sens de rotation, et à vitesse variable, un codeur 21 étant associé à ce moteur électrique pour le contrôle de sa vitesse de rotation.

L'extrémité inférieure de l'arbre 20 du moteur électrique 19 porte un embout d'entraînement 22 en néoprène, ou en une matière équivalente, lequel fait face au moyeu central 5 de la turbine de l'anémomètre 2. Le moteur électrique 19 est monté de manière mobile verticalement à l'intérieur du boîtier 17, de manière à pouvoir appliquer l'embout d'entraînement 22 contre le moyeu 5 ou l'en éloigner.

Le dispositif 16 comprend aussi un capteur photoélectrique 23 dirigé vers la périphérie de la turbine de l'anémomètre 2 à tester, le capteur 23 comptant le nombre de passages devant lui des coupelles 6 de cette turbine, pour détecter la vitesse de rotation de la partie tournante 3 de l'anémomètre. Ce capteur photoélectrique 23 peut être disposé dans la moitié supérieure du boîtier 17, sur le côté de l'emplacement du moteur électrique 19.

Enfin, d'une manière non représentée, le dispositif 16 comporte des moyens d'alimentation électrique, ainsi que des moyens électroniques de traitement des mesures effectuées par le codeur 21 et par le capteur photoélectrique 23.

Après mise en place de l'anémomètre 2 sur le support 18, la vérification du bon fonctionnement de celui-ci s'effectue selon la procédure suivante : Le moteur électrique 19 est abaissé, de sorte que l'embout d'entraînement 22 s'applique contre le moyeu 5 de la turbine de l'anémomètre 2. Le moteur électrique 19 est alimenté, de manière à tourner dans un sens défini et à entraîner en rotation la partie tournante 3 de l'anémomètre 2, par l'intermédiaire de l'embout 22, à une vitesse de rotation initiale Vo prédéfinie, correspondant par exemple à la vitesse de rotation de la turbine de l'anémomètre pour un vent de 80 km/h. Cette vitesse Vo est mesurée à l'aide du codeur 21 associé au moteur 19, et elle est vérifiée à l'aide du capteur photoélectrique 23 qui mesure directement la vitesse de rotation de la turbine ; on s'assure ainsi qu'il n'y a pas de glissement entre le moteur 19 et la turbine ou la partie tournante 3 de l'anémomètre 2.

Cette vérification de non-glissement étant faite, on désaccouple le moteur 19 en l'éloignant de l'anémomètre 2, et on laisse la partie tournante 3 de l'anémomètre tourner librement autour de son axe de rotation vertical A, en ralentissant progressivement.

Au bout d'un temps T, par exemple égal à 20 secondes, on mesure la vitesse de rotation V résiduelle de la partie tournante 3 de l'anémomètre 2, à l'aide du capteur photoélectrique 23, et cette vitesse mesurée est comparée à une vitesse de référence. En exprimant les vitesses de rotation sous la forme de vitesses de vent correspondantes, l'anémomètre 2 est considéré comme correct (dans cette phase de vérification) si la valeur relevée pour la vitesse résiduelle est comprise dans un intervalle de tolérance défini autour de la valeur de référence. Par exemple, cet intervalle de tolérance s'étend de + 2 km/h à - 1 km/h par rapport à la valeur de référence, qui elle-même est égale par exemple à 9 km/h.

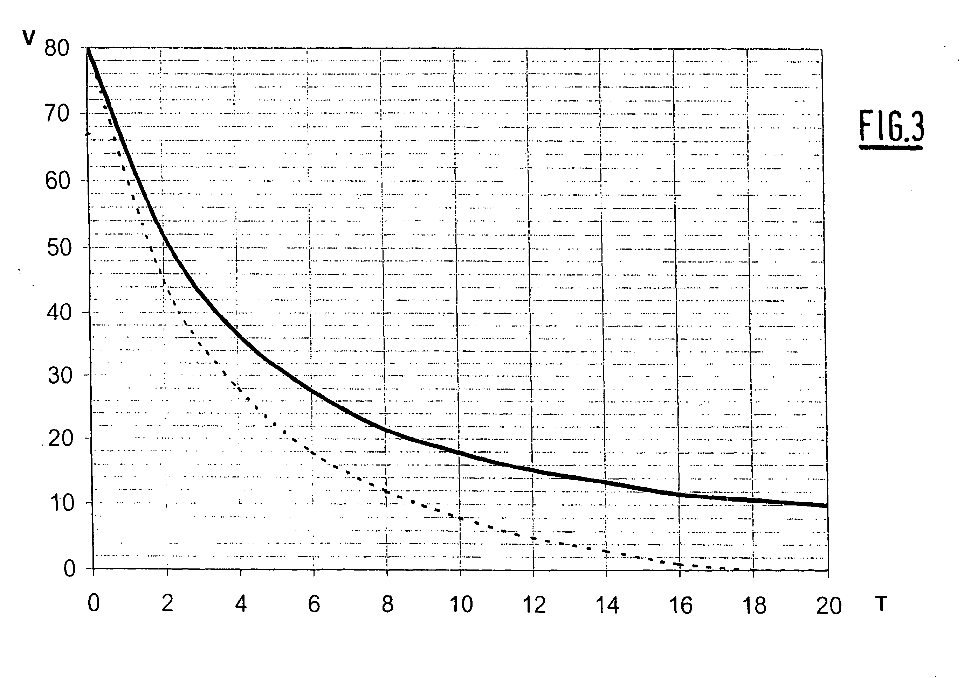

Cette opération est illustrée par le diagramme de la figure 3, sur lequel le temps T exprimé en secondes est porté en abscisses, et la vitesse V exprimée en km/h est portée en ordonnées. La courbe tracée en trait continu représente l'évolution de la vitesse de référence, ou de la vitesse d'un anémomètre en état de fonctionnement correct, depuis l'instant du lancement à une vitesse initiale Vo de 80 km/h jusqu'à l'instant "20 secondes" auquel est effectuée la mesure de la vitesse résiduelle. L'autre courbe, tracée en pointillés, correspond à un anémomètre dont la partie tournante est prématurément ralentie, de sorte que sa vitesse V résiduelle mesurée au bout de 20 secondes est pratiquement nulle, un tel anémomètre étant ainsi reconnu comme défectueux.

Ensuite, on recommence l'opération en faisant tourner le moteur électrique 19 en sens inverse, donc en entraînant aussi en rotation la partie tournante 3 et notamment la turbine de l'anémomètre dans le sens inverse. Le frottement aérodynamique sur les coupelles 6 de la turbine étant alors différent, on obtient au bout du même temps de libre rotation (après désaccouplement du moteur 19) une deuxième valeur mesurée de vitesse que l'on compare à une seconde valeur de référence distincte (ici 6,5 km/h), avec la même tolérance.

On peut ensuite procéder à divers tests annexes, en utilisant toujours le même moteur électrique 19 pour entraîner en rotation la partie tournante 3 de l'anémomètre, mais sans procéder au désaccouplement de ce moteur 19.

Dans un premier test annexe, visant à vérifier la chaîne de mesure de l'anémomètre, celui-ci est connecté à son câble 7 et sa partie tournante 3 est entraînée à diverses vitesses, imposées par les moyens motorisés d'entraînement en rotation (moteur 19) ; on visualise alors, sur l'indicateur 9 appartenant à la grue, la concordance des vitesses imposées et des vitesses lues sur cet indicateur 9, avec une tolérance prédéfinie, par exemple de ±2%.

A titre d'autre test annexe, il peut être ensuite procédé à une vérification du bon fonctionnement des alarmes c'est-à-dire des voyants 10 et 11 (et aussi le cas échéant des voyants 14 et 15), en entraînant en rotation la partie tournante 3 de l'anémomètre 2 par le moteur électrique 19) à des paliers de vitesse prédéfinis, et en constatant alors l'état de ces voyants. Par exemple :
- à une vitesse de rotation correspondant à un vent d'une vitesse de 50 km/h, aucun des voyants ne doit être allumé ;
- à une vitesse de rotation correspondant à un vent de 52 km/h, le voyant jaune 10 doit être éclairé ;
- à une vitesse de rotation correspondant à un vent de 70 km/h, le voyant rouge 11 doit encore être éteint ;
- à une vitesse de rotation correspondant à un vent de 74 km/h, le voyant rouge11 doit être éclairé.

Enfin, un dernier test annexe permet de vérifier l'équilibrage de la partie tournante 3 de l'anémomètre 2, en commandant le moteur électrique 19 de manière à imposer à cette partie tournante 2 une vitesse de rotation élevée, par exemple de 3 000 tours/minutes, équivalente à un vent de 110 km/h. A une telle vitesse, un mauvais équilibrage ou même un léger voilement de la turbine de l'anémomètre 2 produit une forte vibration, facilement détectable par la personne préposée au contrôle.

L'on ne s'éloignerait pas du cadre de l'invention, telle que défiie dans les revendications annexées :
- en modifiant des détails constructifs du dispositif ;
- en utilisant tous moyens pour la mesure ou le contrôle de la vitesse de rotation du moteur et de la turbine ;
- en modifiant l'ordre des tests réalisés, ou en réalisant des tests annexes plus ou moins nombreux ;
- en adaptant le procédé aux caractéristiques particulières des anémomètres à tester et des alarmes associées à ces anémomètres ;
- en utilisant le même procédé pour la vérification du bon fonctionnement d'anémomètres autres que ceux équipant les grues de chantier.

## Revendications

1. Procédé pour vérifier le bon fonctionnement d'un anémomètre (2) avec une partie tournante (3) comportant une turbine à coupelles (6), notamment d'un anémomètre prévu pour être installé sur une grue de chantier, **caractérisé en ce qu'**il consiste, grâce à des moyens motorisés (19) d'entraînement en rotation de la partie tournante (3) de l'anémomètre (2), à lancer en rotation cette partie tournante (3) à une vitesse initiale (Vo) définie, puis à laisser librement tourner la partie tournante (3) en mesurant sa vitesse de rotation (V) résiduelle à au moins un instant (T), la vitesse (V) ainsi mesurée étant comparée à une valeur de référence pour le même instant (T).

2. Procédé selon la revendication 1, **caractérisé en ce que** la partie tournante (3) de l'anémomètre est d'abord lancée en rotation dans un premier sens, une première mesure de vitesse de rotation résiduelle étant faite pendant que cette partie tournante (3) tourne librement dans le premier sens, avec comparaison à une première valeur de référence, puis la partie tournante (3) est lancée en rotation dans le sens opposé, une seconde mesure de vitesse de rotation résiduelle étant faite pendant que cette partie tournante (3) tourne librement dans l'autre sens, avec comparaison à une seconde valeur de référence.

3. Procédé selon la revendication 1 ou 2, **caractérisé en ce qu'**on mesure la vitesse de rotation (V) résiduelle de la partie tournante (3) de l'anémomètre (2) à un instant (T) unique situé à un intervalle de temps prédéfini après l'instant où ladite partie tournante (3) a été désaccouplée des moyens motorisés (19) d'entraînement en rotation.

4. Procédé selon la revendication 3, **caractérisé en ce que** la vitesse de rotation (V) résiduelle mesurée est comparée à un intervalle de tolérance dont les valeurs limites supérieure et inférieure se situent de part et d'autre de la valeur de référence.

5. Procédé selon l'une des revendications 1 à 4, **caractérisé en ce que**, à titre de test annexe, la partie tournante (3) de l'anémomètre (2) est entraînée à des vitesses imposées par les moyens motorisés (19) d'entraînement en rotation, et **en ce que** l'on visualise alors, sur l'indicateur (9) appartenant à la grue, la concordance des vitesses imposées et des vitesses lues sur cet indicateur (9), avec une tolérance prédéfinie.

6. Procédé selon l'une des revendications 1 à 5, **caractérisé en ce que**, à titre de test annexe, il est procédé à une vérification du bon fonctionnement des alarmes(10,11,14,15) qui se déclenchent pour certains seuils prédéfinis de vitesse du vent, en entraînant la partie tournante (3) de l'anémomètre (2), à des vitesses de rotation correspondantes.

7. Procédé selon l'une des revendications 1 à 6, **caractérisé en ce que**, à titre de test annexe, il est procédé à la vérification de l'équilibrage de la partie tournante (3) de l'anémomètre (2) en lui imposant, par une commande correspondante des moyens motorisés (9) d'entraînement en rotation, une vitesse de rotation élevée, pour laquelle un mauvais équilibrage ou même un léger voilement de la turbine produit une forte vibration.

8. Dispositif pour le bon fonctionnement d'un anémomètre (2) avec une partie tournante (3) comportant une turbine à coupelles (6), pour la mise en oeuvre du procédé selon l'une quelconque des revendications 1 à 7, comprenant en combinaison :
- des moyens de support (18) de l'anémomètre (2) à tester,
- un moteur électrique (19) d'entraînement en rotation de la partie tournante (3) de cet anémomètre (2),
- des moyens d'accouplement en rotation (22) non permanent entre le moteur électrique (19) et ladite partie tournante (3) lesdits moyens étant adaptés à laisser tourner librement la partie tournante pendant la mesure de la vitesse de rotation résiduelle,
- des moyens de contrôle (21) de la vitesse de rotation du moteur électrique (19),
- des moyens de mesure (23) de la vitesse de rotation (V) de la partie tournante (3) de l'anémomètre (2), et
- des moyens de traitement de l'information correspondant à la vitesse (V) mesurée, en particulier par comparaison avec une ou plusieurs valeurs de référence.

9. Dispositif selon la revendication 8, **caractérisé en ce que** les moyens d'accouplement en rotation non permanent entre le moteur électrique (19) et la partie tournante (3) de l'anémomètre (2) à tester sont des moyens d'accouplement à friction (22) placés à une extrémité de l'arbre (20) du moteur (19) et coopérant avec le moyeu central (5) de la turbine de l'anémomètre (2).

10. Dispositif selon la revendication 8 ou 9, **caractérisé en ce que** les moyens de contrôle de la vitesse de rotation du moteur électrique (19) d'entraînement en rotation de la partie tournante (3) de l'anémomètre (2), sont constitués par un codeur (21) associé à ce moteur (19).

11. Dispositif selon l'une des revendications 8 à 10, **caractérisé en ce que** les moyens de mesure de la vitesse de rotation (V) de la partie tournante (3) de l'anémomètre (2) comprennent un capteur photoélectrique (23) qui compte le nombre de passages des coupelles (6) de la turbine devant le capteur (23), ce nombre étant converti en une valeur de vitesse (V).

## Claims

1. Method for checking the correct operation of an anemometer (2) with a turning part (3) comprising a turbine with cups (6), in particular of an anemometer intended to be installed on a site crane, **characterized in that** it consists, by virtue of motorized means (19) for rotating the turning part (3) of the anemometer (2), in setting this turning part (3) in rotation at a defined initial speed (Vo), then in allowing the turning part (3) to turn freely while measuring its residual speed of rotation (V) at at least one instant (T), the speed (V) thus measured being compared with a reference value for the same instant (T).

2. Method according to Claim 1, **characterized in that** the turning part (3) of the anemometer is first of all set in rotation in a first direction, a first residual speed of rotation measurement being carried out while this turning part (3) turns freely in the first direction, with comparison with a first reference value, and then the turning part (3) is set in rotation in the opposite direction, a second residual speed of rotation measurement being carried out while this turning part (3) turns freely in the other direction, with comparison with a second reference value.

3. Method according to Claim 1 or 2, **characterized in that** the residual speed of rotation (V) of the turning part (3) of the anemometer (2) is measured at a single instant (T) situated at a predefined time interval after the instant at which the said turning part (3) has been uncoupled from the motorized rotating means (19).

4. Method according to Claim 3, **characterized in that** the measured residual speed of rotation (V) is compared with a tolerance range whose upper and lower limits values are situated on either side of the reference value.

5. Method according to one of Claims 1 to 4, **characterized in that**, by way of auxiliary tests, the turning part (3) of the anemometer (2) is driven at speeds imposed by the motorized rotating means (19), and **in that** there is then displayed, on the indicator (9) belonging to the crane, the correspondence of these imposed speeds and of the speeds read on this indicator (9) with a predefined tolerance.

6. Method according to one of Claims 1 to 5, **characterized in that**, by way of auxiliary test, a check is made of the correct operation of the alarms (10, 11, 14, 15) which trigger for certain predefined wind speed thresholds, by driving the turning part (3) of the anemometer (2) at corresponding speeds of rotation.

7. Method according to one of Claims 1 to 6, **characterized in that**, by way of auxiliary tests, a check is made of the balancing of the turning part (3) of the anemometer (2) by imposing on it, by a corresponding control of the motorized rotating means (9), a high speed of rotation for which a poor balancing or even a slight buckling of the turbine produces a strong vibration.

8. Device for the correct operation of an anemometer (2) with a turning part (3) comprising a turbine with cups (6), for the implementation of the method according to any one of Claims 1 to 7 comprising in combination:
- means (18) for supporting the anemometer (2) to be tested,
- an electric motor (19) for rotating the turning part (3) of this anemometer (2),
- means (22) for non-permanent coupling in rotation between the electric motor (19) and the said turning part (3), the said means being adapted to allow the turning part to turn freely during the measurement of the residual speed of rotation,
- means (21) for monitoring the speed of rotation of the electric motor (19),
- means (23) for measuring the speed of rotation (V) of the turning part (3) of the anemometer (2), and
- means for processing the information corresponding to the measured speed (V), in particular by comparison with one or more reference values.

9. Device according to Claim 8, **characterized in that** the means for non-permanent coupling in rotation between the electric motor (19) and the turning part (3) of the anemometer (2) to be tested are friction coupling means (22) placed at one end of the shaft (20) of the motor (19) and cooperating with the central hub (5) of the turbine of the anemometer (2).

10. Device according to Claim 8 or 9, **characterized in that** the means for monitoring the speed of rotation of the electric motor (19) for rotating the turning part (3) of the anemometer (2) consist of an encoder (21) associated with this motor (19).

11. Device according to one of Claims 8 to 10, **characterized in that** the means for measuring the speed of rotation (V) of the turning part (3) of the anemometer (2) comprise a photoelectric sensor (23) which counts the number of passes of the cups (6) of the turbine in front of the sensor (23), this number being converted into a speed value (V).

## Patentansprüche

1. Verfahren zur Überprüfung des einwandfreien Betriebs eines Anemometers (2) mit einem drehenden Teil (3), der eine Turbine mit Schalen (6) aufweist, insbesondere eines Anemometers, das vorgesehen ist, um auf einen Baustellenkran montiert zu werden, **dadurch gekennzeichnet, dass** es mit Hilfe von motorisierten Einrichtungen (19) für den Drehantrieb des drehenden Teils (3) des Anemometers (2) darin besteht, diesen drehenden Teil (3) mit einer definierten Anfangsgeschwindigkeit (Vo) in Drehung zu versetzen und dann den drehenden Teil (3) frei drehen zu lassen, indem seine Restdrehgeschwindigkeit (V) in mindestens einem Zeitpunkt (T) gemessen wird, wobei die so gemessene Geschwindigkeit (V) mit einem Bezugswert für den gleichen Zeitpunkt (T) verglichen wird.

2. Verfahren nach Anspruch 1, **dadurch gekennzeichnet, dass** der drehende Teil (3) des Anemometers zunächst in einer ersten Richtung in Drehung versetzt wird, wobei eine erste Restdrehgeschwindigkeitsmessung durchgeführt wird, während dieser drehende Teil (3) frei in der ersten Richtung dreht, mit Vergleich mit einem ersten Bezugswert, dann der drehende Teil (3) in Gegenrichtung in Drehung versetzt wird, wobei eine zweite Restdrehgeschwindigkeitsmessung durchgeführt wird, während dieser drehende Teil (3) frei in der anderen Richtung dreht, mit Vergleich mit einem zweiten Bezugswert.

3. Verfahren nach Anspruch 1 oder 2, **dadurch gekennzeichnet, dass** die Restdrehgeschwindigkeit (V) des drehenden Teils (3) des Anemometers (2) in einem einzigen Zeitpunkt (T) gemessen wird, der sich in einem vordefinierten Zeitintervall nach dem Zeitpunkt befindet, in dem der drehende Teil (3) von den motorisierten Drehantriebseinrichtungen (19) abgekuppelt wurde.

4. Verfahren nach Anspruch 3, **dadurch gekennzeichnet, dass** die gemessene Restdrehgeschwindigkeit (V) mit einem Toleranzintervall verglichen wird, dessen obere und untere Grenzwerte sich zu beiden Seiten des Bezugswerts befinden.

5. Verfahren nach einem der Ansprüche 1 bis 4, **dadurch gekennzeichnet, dass** als Zusatztest der drehende Teil (3) des Anemometers (2) mit Geschwindigkeiten angetrieben wird, die von den motorisierten Drehantriebseinrichtungen (19) vorgegeben werden, und dass dann auf dem zum Kran gehörenden Anzeigegerät (9) die Übereinstimmung der vorgegebenen Geschwindigkeiten und der auf diesem Anzeigegerät (9) abgelesenen Geschwindigkeiten mit einer vordefinierten Toleranz angezeigt werden.

6. Verfahren nach einem der Ansprüche 1 bis 5, **dadurch gekennzeichnet, dass** als Zusatztest eine Überprüfung des einwandfreien Betriebs der Alarmvorrichtungen (10, 11, 14, 15) durchgeführt wird, die bei bestimmten vordefinierten Geschwindigkeitsschwellen des Winds ausgelöst werden, indem der drehende Teil (3) des Anemometers (2) mit entsprechenden Drehgeschwindigkeiten angetrieben wird.

7. Verfahren nach einem der Ansprüche 1 bis 6, **dadurch gekennzeichnet, dass** als Zusatztest die Überprüfung des Auswuchtens des drehenden Teils (3) des Anemometers (2) durchgeführt wird, indem ihm durch eine entsprechende Steuerung der motorisierten Drehantriebseinrichtungen (9) eine hohe Drehgeschwindigkeit auferlegt wird, bei der ein schlechtes Auswuchten oder sogar ein leichtes Ausbeulen der Turbine eine starke Schwingung erzeugt.

8. Vorrichtung für den einwandfreien Betrieb eines Anemometers (2) mit einem drehenden Teil (3), der eine Turbine mit Schalen (6) aufweist, zur Durchführung des Verfahrens nach einem der Ansprüche 1 bis 7, die in Kombination enthält:
- Trageinrichtungen (18) des zu testenden Anemometers (2),
- einen Elektromotor (19) für den Drehantrieb des drehenden Teils (3) dieses Anemometers (2),
- Einrichtungen zur nicht dauerhaften Drehkupplung (22) zwischen dem Elektromotor (19) und dem drehenden Teil (3), wobei die Einrichtungen geeignet sind, um den drehenden Teil während der Messung der Restdrehgeschwindigkeit frei drehen zu lassen,
- Einrichtungen (21) zur Kontrolle der Drehgeschwindigkeit des Elektromotors (19),
- Einrichtungen (23) zur Messung der Drehgeschwindigkeit (V) des drehenden Teils (3) des Anemometers (2), und
- Einrichtungen zur Verarbeitung der Information, die der gemessenen Geschwindigkeit (V) entspricht, insbesondere durch Vergleich mit einem oder mehreren Bezugswerten.

9. Vorrichtung nach Anspruch 8, **dadurch gekennzeichnet, dass** die Einrichtungen zur nicht dauerhaften Drehkopplung zwischen dem Elektromotor (19) und dem drehenden Teil (3) des zu testenden Anemometers (2) Reibungskupplungseinrichtungen (22) sind, die an einem Ende der Welle (20) des Motors (19) angeordnet sind und mit der Mittelnabe (5) der Turbine des Anemometers (2) zusammenwirken.

10. Vorrichtung nach Anspruch 8 oder 9, **dadurch gekennzeichnet, dass** die Einrichtungen zur Kontrolle der Drehgeschwindigkeit des Elektromotors (19) für den Drehantrieb des drehenden Teils (3) des Anemometers (2) aus einem diesem Motor (19) zugeordneten Codierer (21) bestehen.

11. Vorrichtung nach einem der Ansprüche 8 bis 10, **dadurch gekennzeichnet, dass** die Einrichtungen zur Messung der Drehgeschwindigkeit (V) des drehenden Teils (3) des Anemometers (2) einen lichtelektrischen Sensor (23) enthalten, der die Anzahl von Durchgängen der Schalen (6) der Turbine vor dem Sensor (23) zählt, wobei diese Anzahl in einen Geschwindigkeitswert (V) umgewandelt wird.
